# EUROPEAN PATENT APPLICATION

(11) **EP 2 372 545 A1**
(43) Date of publication of application: **05.10.2011**
(21) Application number: 11152118.3
(22) Date of filing: 25.01.2011
(51) Int. Cl.: G06F 9/46

(54) **Information processing apparatus, plug-in interaction method, and computer-readable storage medium**

(30) Priority: 26.01.2010 JP 2010014654
(71) Applicant: Ricoh Company, Ltd, Ohta-ku Tokyo 143 (JP)
(72) Inventor: Kashida, Yona, Tokyo 143-8555 (JP)
(74) Representative: Schwabe - Sandmair - Marx

(57) **Abstract**

In an information processing apparatus, each plug-in includes a notifying part to notify a processed result of a logic part of the plug-in to another plug-in or, a receiving part to receive the processed result from the other plug-in. A first plug-in at an interacting source notifies the processed result of the logic part of the first plug-in to a user interface part of a second plug-in at an interacting destination. The receiving part of the second plug-in receives the processed result from the first plug-in, and the user interface part of the second plug-in generates a display screen of the second plug-in based on the processed result received by the second plug-in.

## Description

### BACKGROUND OF THE INVENTION

### 1. Field of the Invention

The present invention relates to an information processing apparatus in which application software includes a plurality of plug-ins and the plug-in performs a screen transition and an interacting operation, and to a plug-in interaction method and a computer-readable storage medium usable in such an information processing apparatus.

### 2. Description of the Related Art

For example, a Japanese Laid-Open Patent Publication No.2009-54027 proposes a technique related to a display screen customizing program aimed at improving an operation screen customizing efficiency for each plug-in. The display screen customizing program includes a screen forming information common to each plug-in, and screen customizing information, and the display screen of each plug-in is generated based on the screen forming information and the screen customizing information. In other words, according to this proposed technique, the display screen generating function is made common with respect to the plurality of plug-ins, in order to unify the display screens of the plug-ins and improve the customizing efficiency. However, from the point of view of providing convenient functions and facilitating operation by the user, it may be desirable to customize the display screens of the plug-ins for each plug-in.

On the other hand, in order to quickly provide the functions and to modify or expand the functions of the plug-ins, the plug-ins may be developed and provided by a plurality of different organizations, such as other developing departments and other software vendors. In such cases, it may not only be possible to provide UIs (User Interfaces) that take into account the convenient functions and the facilitated operation but also improve the developing efficiency of the plug-ins, if the display screen of the plug-ins is customized in units of organizations that develop the plug-ins.

Hence, the software structure of the plug-in may include a UI part to generate the display screen, and a logic part to execute the processes for realizing the functions, by taking into account the developing efficiency of the plug-in and the customizing ease of the display screen.

However, the conventional plug-ins have the following problems when an interaction is to be achieved between the plug-ins. In other words, in the conventional plug-in, the logic part controls the screen display of the UI part. For this reason, the screen transition at the time of achieving the interaction between the plug-ins is controlled by each logic part of the interacting plug-ins. For example, if a plug-in A and a plug-in B perform an interacting operation and a transition is made from the display screen of the plug-in A to the display screen of the plug-in B, the logic part of the plug-in A executes a predetermined process according to an operating instruction from the user that is accepted by the UI part of the plug-in A. Then, the processed result of the logic part of the plug-in A is notified to the logic part of the plug-in B, and the screen transition is instructed. The logic part of the plug-in B instructs the screen display to the UI part of the plug-in B based on the notified processed result. As a result, the transition is made from the display screen of the plug-in A to the display screen of the plug-in B.

As described above, in the conventional plug-in, the screen transition control at the time of achieving the interaction between the plug-ins is performed by the logic part of the plug-in. Consequently, the independence between the logic part and the UI part of the plug-in may not be maintained. In addition, even if the function to the realized by the logic part is to be made common for each of the plug-ins, the screen transition control may not be made common for each of the plug-ins. Hence, the same function is provided in the logic parts of the different plug-ins.

Therefore, according to the conventional plug-ins, it may be difficult to develop and maintain the software, and resources may be wasted, that is, not utilized efficiently.

### SUMMARY OF THE INVENTION

Accordingly, it is a general object in one embodiment of the present invention to provide a novel and useful information processing apparatus, plug-in interaction method, and computer-readable storage medium, in which the problem described above may be suppressed.

Another and more specific object in one embodiment of the present invention is to provide an information processing apparatus, a plug-in interaction method, and a computer-readable storage medium, that may maintain independence of a UI part and a logic part of a plug-in, and enable an interacting operation between the plug-ins.

According to one aspect of the present invention, there is provided an information processing apparatus including a storage unit configured to store application software including a plurality of plug-ins; and a processor configured to execute the application software stored in the storage unit; wherein each of the plurality of plug-ins includes a user interface part configured to generate a display screen of a corresponding one of the plurality of plug-ins, and a logic part configured to perform a process to realize a function of the corresponding one of the plurality of plug-ins; the corresponding one of the plug-ins includes at least one of a notifying part configured to notify a processed result of the logic part of the corresponding one of the plug-ins to another plug-in, and a receiving part configured to receive the processed result from the other plug-in; and a first plug-in at an interacting source among the plurality of plug-ins notifies the processed result of the logic part of the first plug-in to the user interface part of a second plug-in at an interacting destination among the plurality of plug-ins, and the receiving part of the second plug-in receives the processed result from the notifying part of the first plug-in and the user interface part of the second plug-in generates a display screen of the second plug-in based on the processed result received by the receiving part of the second plug-in.

According to another aspect of the present invention, there is provided a plug-in interaction method to be implemented in an information processing apparatus, including executing application software, stored in a storage unit and including a plurality of plug-ins, by a processor; wherein each of the plurality of plug-ins includes a user interface part configured to generate a display screen of a corresponding one of the plurality of plug-ins, and a logic part configured to perform a process to realize a function of the corresponding one of the plurality of plug-ins; notifying from a first plug-in at an interacting source among the plurality of plug-ins the processed result of the logic part of the first plug-in to the user interface part of a second plug-in at an interacting destination among the plurality of plug-ins; and receiving by the receiving part of the second plug-in the processed result from the notifying part of the first plug-in and generating by the user interface part of the second plug-in a display screen of the second plug-in-based on the processed result received by the receiving part of the second plug-in.

According to another aspect of the present invention, there is provided a computer-readable storage medium that stores a program which, when executed by a computer, causes the computer to perform a plug-in interaction process, the plug-in interaction process including a procedure causing the computer to execute application software stored in a storage unit and including a plurality of plug-ins; wherein each of the plurality of plug-ins includes a user interface part configured to generate a display screen of a corresponding one of the plurality of plug-ins, and a logic part configured to perform a process to realize a function of the corresponding one of the plurality of plug-ins; a procedure causing the computer to notify from a first plug-in at an interacting source among the plurality of plug-ins the processed result of the logic part of the first plug-in to the user interface part of a second plug-in at an interacting destination among the plurality of plug-ins; and a procedure causing the computer to receive by the receiving part of the second plug-in the processed result from the notifying part of the first plug-in and to generate by the user interface part of the second plug-in a display screen of the second plug-in based on the processed result received by the receiving part of the second plug-in.

Other objects and further features of the present invention will be apparent from the following detailed description when read in conjunction with the accompanying drawings.

### BRIEF DESCRIPTION OF THE DRAWINGS

FIG. 1 is a block diagram illustrating an example of a hardware structure of an information processing apparatus in a first embodiment of the present invention;
FIG. 2 is a block diagram illustrating an example of a software structure of an application in the first embodiment of the present invention;
FIG. 3 is a sequence diagram for explaining an example of a sequence of a plug-in interaction process in the first embodiment of the present invention;
FIG. 4 is a block diagram illustrating an example of a software structure for achieving a plug-in interaction in the first embodiment of the present invention;
FIG. 5 is a block diagram illustrating an example of a software structure for achieving a plug-in interaction in a second embodiment of the present invention;
FIG. 6 is a sequence diagram for explaining an example of a sequence of the plug-in interaction process in the second embodiment of the present invention;
FIG. 7 is a block diagram illustrating an example of a functional structure of the information processing apparatus in the second embodiment of the present invention;
FIG. 8 is a sequence diagram for explaining in more detail the example of the sequence of the plug-in interaction process in the second embodiment of the present invention;
FIG. 9 is a diagram for explaining an example of a plug-in interacting operation in a third embodiment of the present invention;
FIG. 10 is a block diagram illustrating an example of a functional structure of the information processing apparatus in the third embodiment of the present invention; and
FIG. 11 is a sequence diagram for explaining in detail an example of a sequence of the plug-in interaction process in the third embodiment of the present invention.

### DESCRIPTION OF THE PREFERRED EMBODIMENTS

A description will be given of embodiments of an information processing apparatus, a plug-in interaction method, and a computer-readable storage medium, by referring to the drawings.

### [First Embodiment]

### <Hardware Structure>

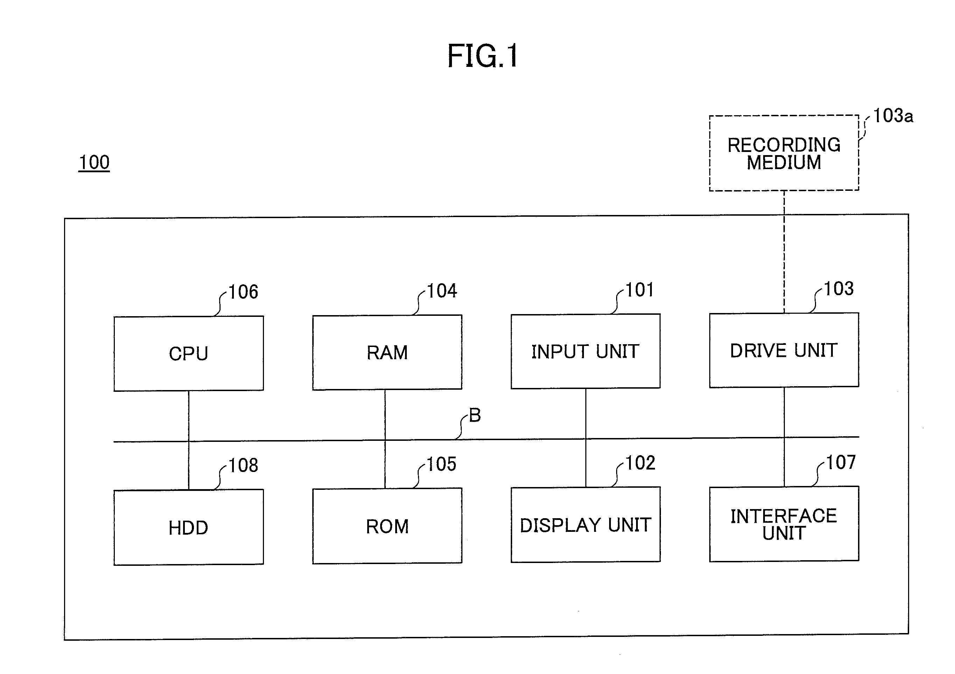

A description will be given of a hardware structure of an information processing apparatus in a first embodiment of the present invention. FIG. 1 is a block diagram illustrating an example of the hardware structure of the information processing apparatus in the first embodiment of the present invention.

As illustrated in FIG. 1, an information processing apparatus 100 includes an input unit 101, a display unit 102, a drive unit 103, a RAM (Random Access Memory) 104, a ROM (Read Only Memory) 105, a CPU (Central Processing Unit) 106, an interface unit 107, and a HDD (Hard Disk Drive) 108 that are mutually connected via a bus B.

The input unit 101 may be formed by a keyboard, a mouse, or the like, and may be used to input various kinds of information and commands including operation signals to the information processing apparatus 100. The display unit 102 may be formed by a display (or display device) to display various kinds of information including processed results of the information processing apparatus 100.

The interface unit 107 connects the information processing apparatus 100 to a predetermined data channel, such as a LAN (Local Area Network). Hence, the information processing apparatus 100 may make a data communication with a peripheral equipment 200, such as a printer or a PC (Personal Computer), via the interface unit 107.

The HDD 108 forms a non-volatile storage unit for storing various kinds of programs and data. For example, the various kinds of programs may include an information processing system that controls the entire information processing apparatus 100, and application software (hereinafter simply referred to as applications) that provide various kinds of functions in the information processing system. The information processing system may include basic software, such as the Windows (registered trademark) or UNIX (registered trademark) OS (Operating System), In addition, the HDD 108 manages the programs and the data stored therein by a predetermined file system and/or a DB (Data-Base).

The drive unit 103 forms an interface with respect to a detachable recording medium 103a which may be attached to and detached from the drive unit 103. Hence, the information processing apparatus 100 may read information from the recording medium 103a and/or write information to the recording medium 103a via the drive unit 103.

The ROM 105 may be formed by a non-volatile semiconductor (or storage unit) to save internal data even when the power of the information processing apparatus 100 is OFF. The ROM 105 may store a BIOS (Basic Input/Output System) that is executed by the information processing apparatus 100 is started (or booted), and data related to the system settings and the network related settings of the information processing apparatus 100.

The RAM 104 may be formed by a volatile semiconductor memory (or storage unit) to temporarily store the programs and the data read from the various kinds of storage units described above. The CPU 106 forms a processor that executes the programs read from the ROM 105 or the HDD 108 and are stored in the RAM 104, in order to realize the operations of the information processing apparatus 100, including the control of the entire information processing apparatus 100 and the various installed functions of the information processing apparatus 100.

The information processing apparatus 100 having the hardware structure described above may provide information processing services (or information processing functions).

The hardware structure of the information processing apparatus 100 is approximately the same as that of a general-purpose computer, such as the PC (Personal Computer).

### <Software Structure>

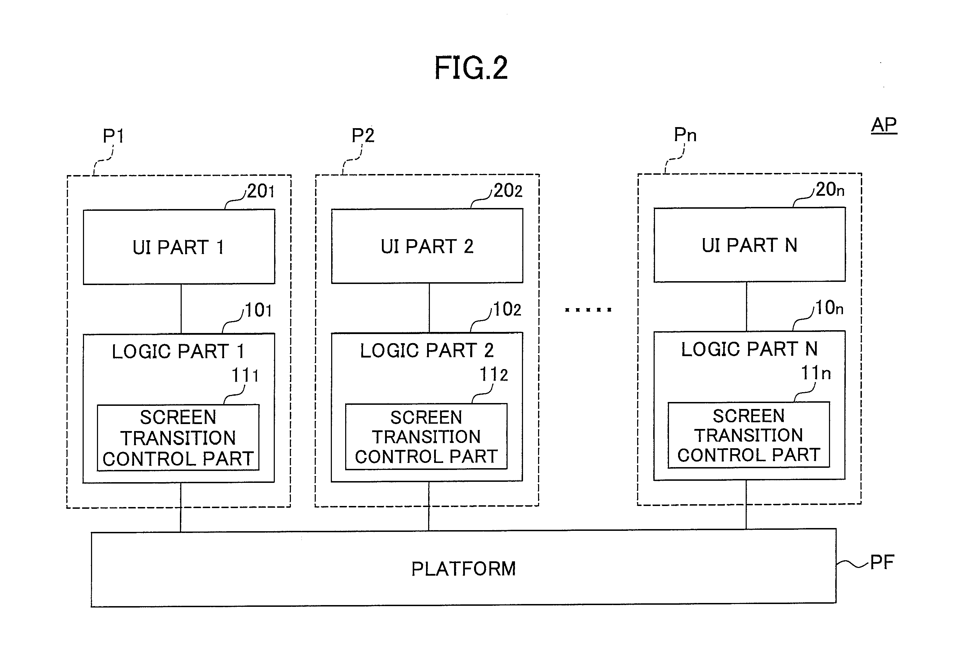

Next, a description will be given of a software structure of the application that is installed in the information processing apparatus 100, by referring to FIG. 2. FIG. 2 is a block diagram illustrating an example of the software structure of the application in the first embodiment of the present invention.

As illustrated in FIG. 2, an application AP includes a plurality of plug-ins P1 through Pn (hereinafter also referred to as plug-ins P), and a platform PF forming an operating environment of the plug-ins P, where n is a natural number greater than or equal to 2. Hence, the functions of the application AP are realized and provided by the interacting operation of each of the plug-ins P1 through Pn performed on the platform PF. This software structure may quickly provide the functions by the improved developing efficiency and the independently developed parts (that is, software parts), and realize suitable modification or expansion of the functions.

Furthermore, each plug-in Pi includes a plug-in logic part 10ᵢ that performs a process to realize a function, and a plug-in UI part 20ᵢ that generates a display screen, where i=1, ..., n. The logic parts 10₁ through 10ₙ are hereinafter also referred to as logic parts 10, and the UI parts 20₁ through 20n are hereinafter also referred to as UI parts 20. This software structure may improve the developing efficiency of the plug-ins P, and improve the customizing ease of the display screens.

The logic parts 10 and the UI parts 20 have the following relationship. For example, the logic part 10₁ and the UI part 20₁ are software parts belonging to the same plug-in P1. On the other hand, the logic part 10₂ and the UI part 20₁ are software parts belonging to mutually different plug-ins P2 and P1. In other words, the logic part 10₂, when viewed from the UI part 20₁, is a software part belonging to the plug-in P2 that is different from the plug-in P1 to which the UI part 20₁ belongs. This relationship holds among the logic parts 10 and also among the UI parts 20. Hence, the plug-in interaction in this software structure refers to the interaction of the software parts belonging to mutually different plug-ins P.

According to the application AP having the software structure illustrated in FIG. 2, the logic part 10i includes a screen transition control part 11ᵢ, where i=1, ..., n. The screen transition control parts 11₁ through 11ₙ are hereinafter also referred to as screen transition control parts 11.

### <Plug-In Interacting Function>

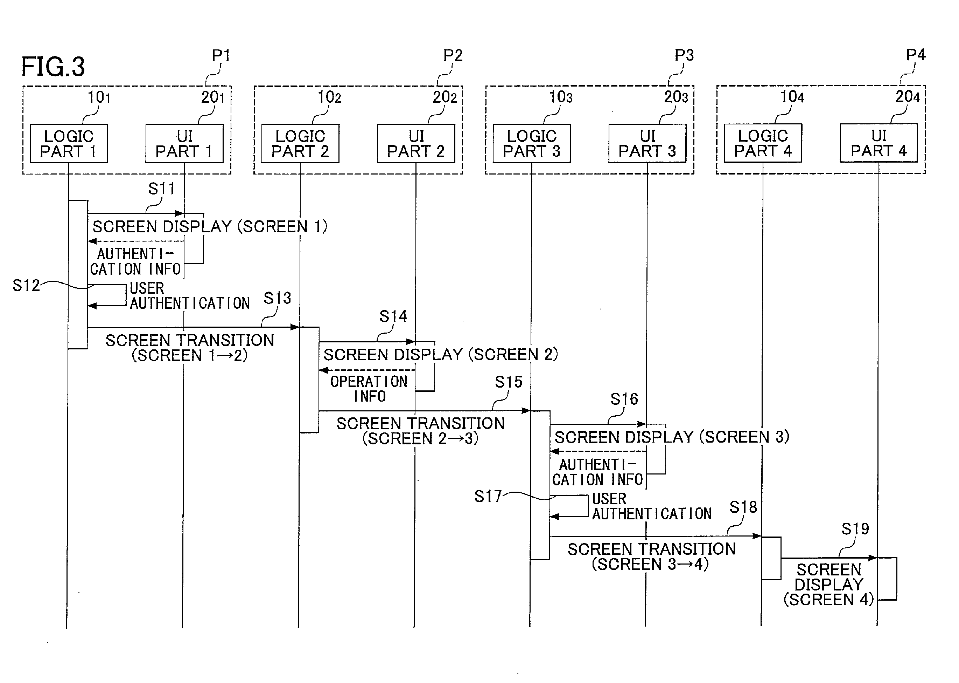

First, a description will be given of the plug-in interacting function in the application AP illustrated in FIG. 2, by referring to FIG. 3. FIG. 3 is a sequence diagram for explaining an example of a sequence of a plug-in interaction process in the first embodiment of the present invention. FIG. 3 illustrates an example of the processing sequence of the plug-in interaction for a case where the application AP includes 4 plug-ins P1 through P4. In addition, this application AP requires user authentication when making a screen transition from the plug-in P1 to the plug-in P2 and when making a screen transition from the plug-in P3 to the plug-in P4. In the information processing apparatus 100 installed with this application AP, the plug-in interaction within the application AP is performed in the following manner.

As illustrated in FIG. 3, in the information processing apparatus 100, a screen display is instructed from the logic part 10₁ of the plug-in P1 with respect to the UI part 20₁, in a step S11. As a result, the display unit 102 displays an operation screen (authentication screen: screen 1) of the plug-in P1. In the information processing apparatus 100, authenticating information (for example, user ID and password) accepted from the user input is sent from the UI part 20₁ to the logic part 10₁.

In the information processing apparatus 100, the logic part 10₁ performs a user authentication process based on the authenticating information, in a step S12. An authentication result is notified to the logic part 10₂ of the plug-in P2 at the interacting destination, and a screen transition (screen 1→2) is instructed from the plug-in P1 to the plug-in P2, in a step S13.

Next, in the information processing apparatus 100, a screen display is instructed from the logic part 10₂ of the plug-in P2 with respect to the UI part 20₂, in a step S14. As a result, an operation screen (screen 2) of the plug-in P2, in which the authentication result is reflected, is displayed on the display unit 102. In the information processing apparatus 100, the operation information (for example, next process specifying) accepted from the user input is set from the UI part 20₂ to the logic part 10₂.

In the information processing apparatus 100, the logic part 10₂ performs a predetermined process if necessary, and a processed result is notified to the logic part 10₃ of the plug-in P3 at the interacting destination, in order to instruct a screen transition (screen 2→3) from the plug-in P2 to the plug-in P3, in a step S15.

Next, in the information processing apparatus 100, a screen display is instructed from the logic part 10₃ of the plug-in P3 with respect to the UI part 20₃, in a step S16. As a result, an operation screen (authentication screen: screen 3) of the plug-in P3 is displayed on the display unit 102. In the information processing apparatus 100, the authenticating information accepted from the user input is sent from the UI part 20₃ to the logic part 10₃.

In the information processing apparatus 100, the logic part 10₃ performs a user authentication process based on the authenticating information, in a step S17. An authentication result is notified to the logic part 10₄ of the plug-in P4 at the interacting destination, and a screen transition (screen 3→4) is instructed from the plug-in P3 to the plug-in P4, in a step S18.

Then, in the information processing apparatus 100, a screen display is instructed from the logic part 10₄ of the plug-in P4 with respect to the UI part 20₄, in a step S19. As a result, an operation screen (screen 4) in which the authentication result is reflected is displayed on the display unit 102.

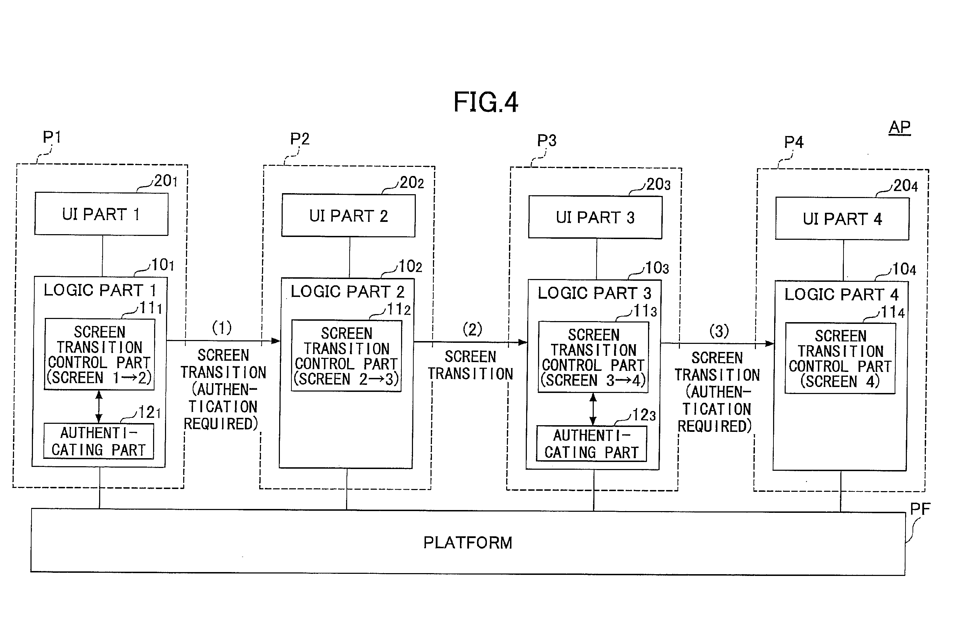

Accordingly, when performing the plug-in interaction process in the application AP described above, the software structure becomes as illustrated in FIG. 4. FIG. 4 is a block diagram illustrating an example of the software structure for achieving the plug-in interaction in the first embodiment of the present invention.

As illustrated in FIG. 4, the logic parts 10₁ through 10₄ of the plug-ins P1 through P4 respectively include screen transition control parts 11₁ through 11₄ that control the screen transition to the interacting destination. For this reason, in the plug-ins P, the independence may not be maintained between the UI parts 20 and the logic parts 10, and a developer of the logic part may be required to have technical knowledge that is more than originally necessary, when modifying the interacting destination. In other words, the developer of the logic part may be required to understand the technology related to the screen process that is other than the function realizing process. But such a requirement would be a burden on the developer of the logic part, and may interfere with the realization of a highly efficient development of the plug-ins P by the work sharing.

In addition, the logic parts 10₁ and 10₃ of the plug-ins P1 and P3 have the same function (that is, authenticating parts 12₁ and 12₃) for performing the user authentication. This is because the logic parts 10₁ and 10₃ respectively include the screen transition control parts 11₁ and 11₃, and the user authentication is required when performing the operation of the screen transition control parts 11₁ and 11₃. Consequently, the function that may be common to the logic parts 10 of the plug-ins P are provided in each of the logic parts 10, and resources may be wasted. Moreover, the developer of the logic part must be responsible for the development and maintenance of the complex software.

Therefore, the plug-ins P described above may make the software development and maintenance difficult, and resources may be wasted.

### [Second Embodiment]

Accordingly, in the information processing apparatus 100 in a second embodiment of the present invention, the UI part 20₁ of the plug-in P1 at the interacting source notifies the processed result of the logic part 10₁ with respect to the UI part 20₂ of the plug-in P2 at the interacting destination, in order to instruct the screen display after the transition. In other words, the information processing apparatus 100 of this embodiment includes such a plug-in interacting function.

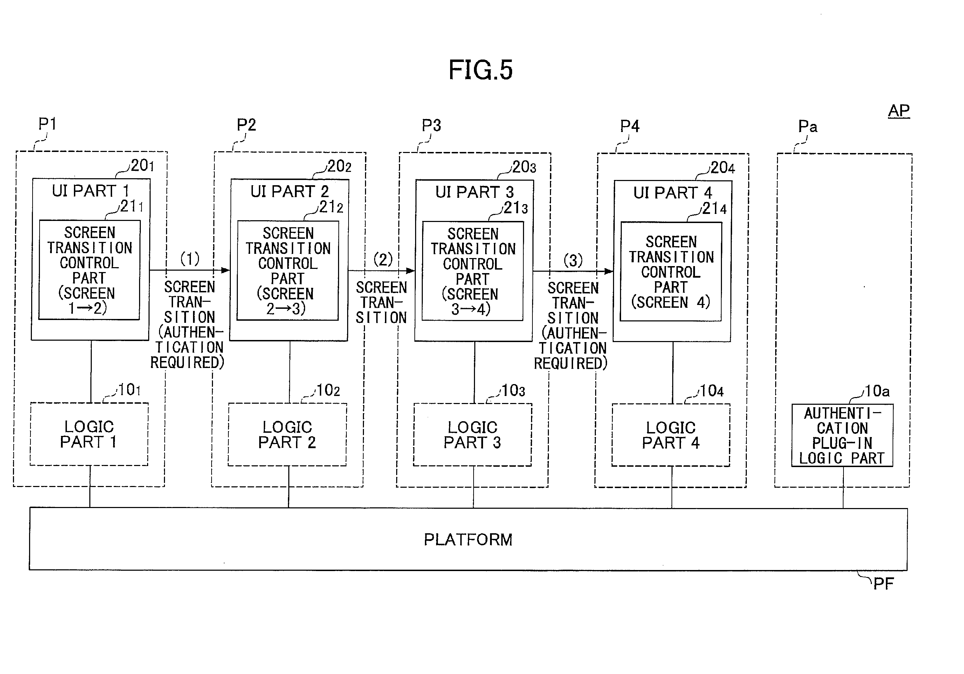

FIG. 5 is a block diagram illustrating an example of a software structure for achieving the plug-in interaction in the second embodiment of the present invention. FIG. 5 illustrates the software structure of the application AP in this embodiment for the case where the plug-in interaction identical to that described above in conjunction with FIG. 3 is performed.

The software structure of the application AP in this embodiment differs from the software structure illustrated in FIG. 4 on the following points. That is, in the application AP of this embodiment, the UI parts 20₁ through 20₄ of the plug-ins P1 through P4, and not the logic parts 10₁ through 10₄, include function parts (that is, screen transition control parts 21₁ through 21₄) for controlling the screen transition at the time of the plug-in interaction. Hence, the independence of the logic parts 10 and the UI parts 20 is maintained in the plug-ins P, and the developer of the UI part who is skilled in the technology related to the screen process may cope with the modification of the interacting destination. As a result, the work sharing of the development and maintenance may be clearly defined.

In addition, because the overlapping functions (that is, the authenticating parts 12₁ and 12₃) of the logic parts 10₁ and 10₃ in the plug-ins P1 and P3 may be replaced by a single common function in the form of a plug-in. The single common function may be used because the independence of the logic parts 10 may be maintained due to the above described structure in which the UI part 20 includes the screen transition control part 21 (or screen transition function).

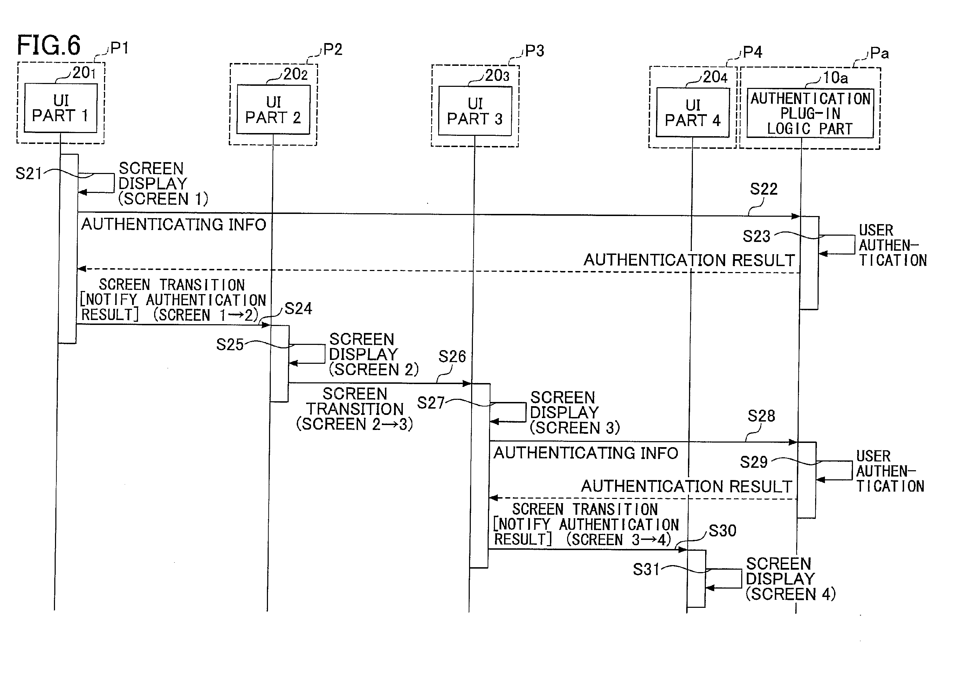

Next, a description will be given of an example of a sequence of the plug-in interaction process in the application AP of this embodiment, by referring to FIG. 6. FIG. 6 is a sequence diagram for explaining this example of the sequence of the plug-in interaction process in the second embodiment of the present invention.

As illustrated in FIG. 6, in the information processing apparatus 100, a display screen is generated by the UI part 20₁ of the plug-in P1, in a step S21. As a result, an operation screen (authentication screen: screen 1) of the plug-in P1 is displayed on the display unit 102. In the information processing apparatus 100, the authenticating information accepted from the user input is sent from the UI part 20₁ to a logic part 10a of a common authentication plug-in Pa, in a step S22.

In the information processing apparatus 100, the logic part 10a of the authentication plug-in Pa performs a user authentication process based on the authenticating information, in a step S23. An authentication result is notified to the UI part 20₁ of the plug-in P1. In the information processing apparatus 100, the authentication result is sent from the UI part 20₁ of the plug-in P1 to the UI part 20₂ of the plug-in P2 at the interacting destination, and a screen transition (screen 1→2) is instructed from the plug-in P1 to the plug-in P2, in a step S24.

Next, in the information processing apparatus 100, the UI part 20₂ of the plug-in P2 generates a display screen, in a step S25. As a result, an operation screen (screen 2) of the plug-in P2, in which the authentication result is reflected, is displayed on the display unit 102. In the information processing apparatus 100, the operation information accepted from the user input is sent from the UI part 20₂ of the plug-in P2 to the UI part 20₃ of the plug-in P3 at the interacting destination, and a screen transition (screen 2→3) is instructed from the plug-in P2 to the plug-in P3, in a step S26.

Then, in the information processing apparatus 100, the UI part 20₃ of the plug-in P3 generates a display screen, in a step S27. As a result, an operation screen (authentication screen: screen 3) of the plug-in P3 is displayed on the display unit 102. In the information processing apparatus 100, the authenticating information accepted from the user input is sent again from the UI part 20₃ to the logic part 10a of the authentication plug-in Pa, in a step S28.

In the information processing apparatus 100, the logic part 10a of the authentication plug-in Pa performs a user authentication process based on the authenticating information, in a step S29. An authentication result is notified to the UI part 20₃ of the plug-in P3. In the information processing apparatus 100, the authentication result is sent from the UI part 20₃ of the plug-in P3 to the UI part 20₄ of the plug-in P4 at the interacting destination, and a screen transition (screen 3→4) is instructed from the plug-in P3 to the plug-in P4, in a step S30.

Next, in the information processing apparatus 100, the UI part 20₄ of the plug-in P4 generates a display screen, in a step S31. As a result, an operation screen (screen 4) of the plug-in P4, in which the authentication result is reflected, is displayed on the display unit 102.

According to the information processing apparatus 100 of this embodiment, the UI parts 20 of the plug-ins P, and not the logic parts 10, control the screen transitions at the time of the plug-in interaction, and the processed results of the logic parts 10 are sent to the interacting destinations via the UI parts 20. Hence, in the information processing apparatus 100 of this embodiment, the interacting operation of the plug-ins may be performed using the structure in which the independence of the logic parts 10 and the UI parts 20 is maintained.

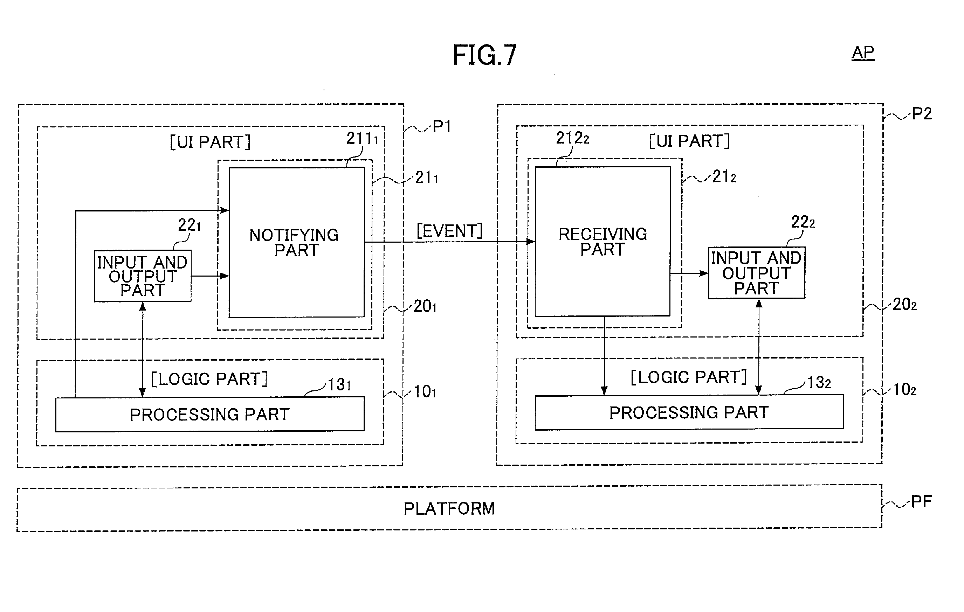

Next, a description will be given of the structure and operation of the plug-in interacting function of this embodiment, by referring to FIG. 7. FIG. 7 is a block diagram illustrating an example of a functional structure of the information processing apparatus in the second embodiment of the present invention. FIG. 7 illustrates an example of the functional structure for a case where the application AP including the plug-ins P1 and P2 is installed in the information processing apparatus 100. In FIG. 7, it is assumed for the sake of convenience that the processed result of the plug-in P1 is notified to the plug-in P2 by the interacting operation in the application AP.

As illustrated in FIG. 7, the plug-ins P1 and P2 include, as function parts that are common to the plug-ins P, processing parts 13₁ and 13₂ (hereinafter also referred to as processing parts 13) and input and output parts 22₁ and 22₂ (hereinafter also referred to as input and output parts 22).

The processing parts 13 are included in the logic parts 10, and form function parts to realize functions to be provided by the plug-ins P. In addition, the input and output parts 22 are included in the UI parts 20, and form function parts to accept operation inputs from the user and to display and output information with respect to the user.

Next, a description will be given of the example operation of the function part described above, for a case where the plug-ins P provide the authenticating function. First, the input and output part 22 displays an authenticating screen (or log-in screen) that urges the user to input the authenticating information (for example, the user ID and the password). Then, the input and output part 22 accepts the authenticating information input by the user, and sends the authenticating information to the processing part 13. The processing part 13 performs a user authentication based on the authenticating information, and sends an authentication result to the input and output part 22. The input and output part 22 displays a screen in which the authentication result is reflected.

On the other hand, the plug-in P1 includes a notifying part 211₁, and the plug-in P2 includes a receiving part 212₂, respectively, as a function part (or screen transition control part) to control the screen transition at the time of the plug-in interaction.

The notifying part 211₁ forms a function part of the screen transition control part 21₁ included in the UI part 20₁ of the plug-in P1. The notifying part 211₁ notifies the information from the input and output part 22₁ and/or the processing part 13₁, as an event, to the plug-in P2, and instructs a screen transition with respect to the plug-in P2 at the interacting destination. In this state, the notifying part 211₁ generates an event class accessible by the plug-in P2 (or the receiving part), based on the information sent to the plug-in P2 at the interacting destination, in order to notify the event. The information from the input and output part 22₁ may include a process request instruction from the user, an input value, and the like, for example. In addition, the information from the processing part 13₁ may include the processed result, for example.

The receiving part 212₂ forms a function part of the screen transition control part 21₂ included in the UI part 20₂ of the plug-in P2. The receiving part 212₂ receives an event notified from the plug-in P1. In this state, the receiving part 212₂ refers to the event class generated by the notifying part 22₁, in order to receive the event. The receiving part 212₂ sends the information obtained from the received event to the input and output part 22₂ and/or the processing part 13₂, and instructs a process after the interaction. The process after the interaction may include the screen transition process.

A description will be given of an example in which the user authentication is required for the plug-in interaction from the plug-in P1 to the plug-in P2, for example. First, the notifying part 211₁ of the plug-in P1 generates the event class accessible by the plug-in P2, based on the authenticating information input by the user, and notifies the event. The receiving part 212₂ of the plug-in P2 obtains the authenticating information from the received event, and sends the authenticating information to the processing part 13₂ of the plug-in P2. The processing part 13₂ performs a user authentication based on the authenticating information, and sends an authentication result to the input and output part 22₂. The input and output part 22₂ displays a screen of the plug-in P2, in which the authentication result is reflected. As a result, the display screen of the display unit 102 is caused to make a transition from the display screen of the plug-in P1 to the display screen of the plug-in P2.

Accordingly, in the information processing apparatus 100 of this embodiment, the processed result of the logic part 10₁ is notified from the UI part 20₁ of the plug-in P1 at the interacting source with respect to the UI part 20₂ of the plug-in P2 at the interacting destination, and the screen display after the transition is instructed.

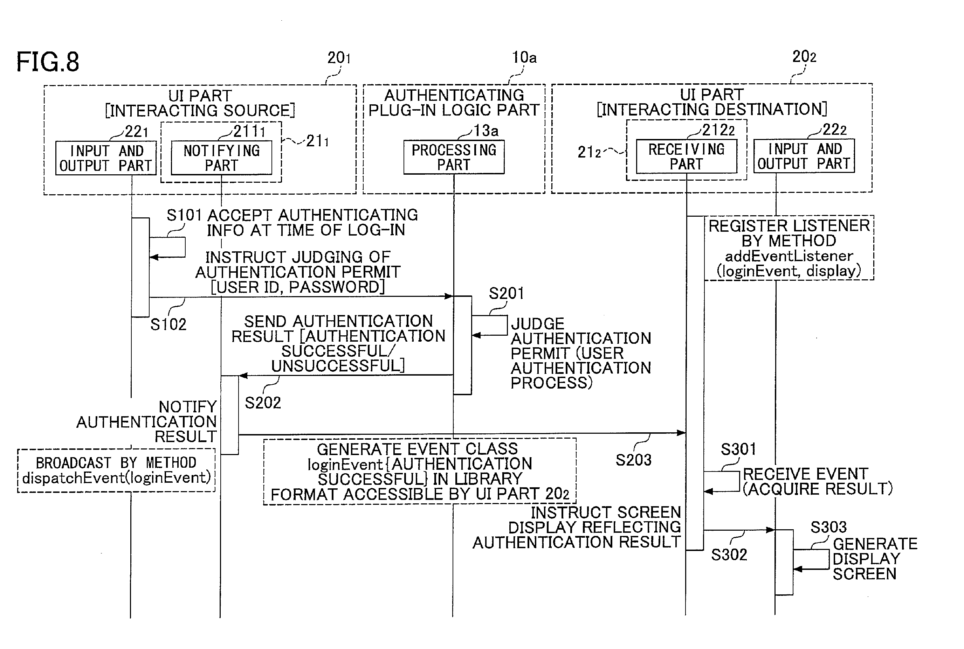

Next, a more detailed description will be given of the operation of the plug-in interacting function (that is, interacting operation of a function part group) in this embodiment, by referring to FIG. 8. The plug-in interacting function is realized by reading the program to be installed in the information processing apparatus 100 from a storage location (for example, the ROM or HDD), storing the program in the RAM 104, and executing the program by the CPU 106 to perform the following process.

FIG. 8 is a sequence diagram for explaining in more detail the example of the sequence of the plug-in interaction process in the second embodiment of the present invention. FIG. 8 illustrates in more detail the plug-in interaction of the steps S21 through S25 illustrated in FIG. 6, from the plug-in P1 to the plug-in P2, and including the user authentication.

As illustrated in FIG. 8, in the information processing apparatus 100, the input and output part 22₁ included in the UI part 20₁ of the plug-in P1 accepts the authenticating information of the user (for example, the user ID and the password) input from the display screen, in a step S101. The input and output part 22₁ sends the accepted authenticating information to the processing part 13a (corresponding to an authenticating part) included in the logic part 10a of the authentication plug-in Pa, and instructs judging of the authentication permit of the user, in a step S102.

In the information processing apparatus 100, the processing part 13a included in the logic part 10a of the authentication plug-in Pa judges the authentication permit based on the authenticating information, in a step S201. The processing part 13a sends an authentication result to the notifying part 211₁ included in the UI part 20₁ of the plug-in P1, in a step S202. The notifying part 211₁ notifies the authentication result by a "dispatchEvent" method, in a step S203.

The notifying part 211₁ may perform the following process. That is, the notifying part 211₁ may specify and call an event object (loginEvent) to the "dispatchEvent" method. As a result, the "dispatchEvent" method broadcasts a specified event object with respect to a listener (or event receiving destination) that is registered via an "addEventListener" method for receiving the event. In this state, an event class (loginEvent {authentication successful}) in which the authentication result is defined is generated in a library format in the memory accessible by the plug-in P2 (or interacting destination) that is registered via the "addEventListener" method for receiving the event.

In the "addEventListener" method, the listener may be registered by specifying an event object (eventObj) corresponding to the received event at the time of the broadcasting, and an execution process (action) at the time of receiving the event. Hence, the screen transition at the time of the plug-in interaction may be made by registering the plug-in P2 at the interacting destination by specifying and registering the specified event object (loginEvent) of the plug-in P1 and the execution process (display) at the time of receiving the event from the plug-in P1. More particularly, the screen transition may be made by the following process.

In the information processing apparatus 100, the receiving part 212₂ included in the UI part 20₂ of the plug-in P2 receives the authentication result notification from the plug-in P1, in a step S301. In this state, the receiving part 212₂ acquires the authentication result defined from the event class.

Next, the receiving part 212₂ sends the authentication result to the input and output part 22₂ included in the UI part 20₂, according to the execution process (display) at the time of receiving the event, and instructs a screen display in which the authentication result is reflected, in a step S302. Hence, a screen transition (screen 1→2) is instructed from the plug-in P1 to the plug-in P2.

In the information processing apparatus 100, the input and output part 22₂ included in the UI part 20₂ of the plug-in P2 generates a display screen, in a step S303. As a result, an operation screen (screen 2) of the plug-in P2, in which the authentication result is reflected, is displayed on the display unit 102.

Therefore, according to the information processing apparatus 100 of this embodiment, the plug-in interaction accompanying the screen transition is realized by controlling the screen transition at the time of the plug-in interaction by the UI part 20 of the plug-in P, and not by the logic part 10, and transferring the processed result of the logic part 10 to the interacting destination via the UI part 20.

### [Third Embodiment]

According to the functional structure illustrated in FIG. 7, the plug-in interaction is realized by notifying the information from the UI part 20₁ of the plug-in P1 at the interacting source to the UI part 20₂ of the plug-in P2 at the interacting destination, that is, by information transfer in one direction.

However, the plug-in interacting function may have a structure such that the interacting operation is performed by transferring the information in two directions between the plug-ins. In other words, the interacting destination and the interacting source may be interchanged.

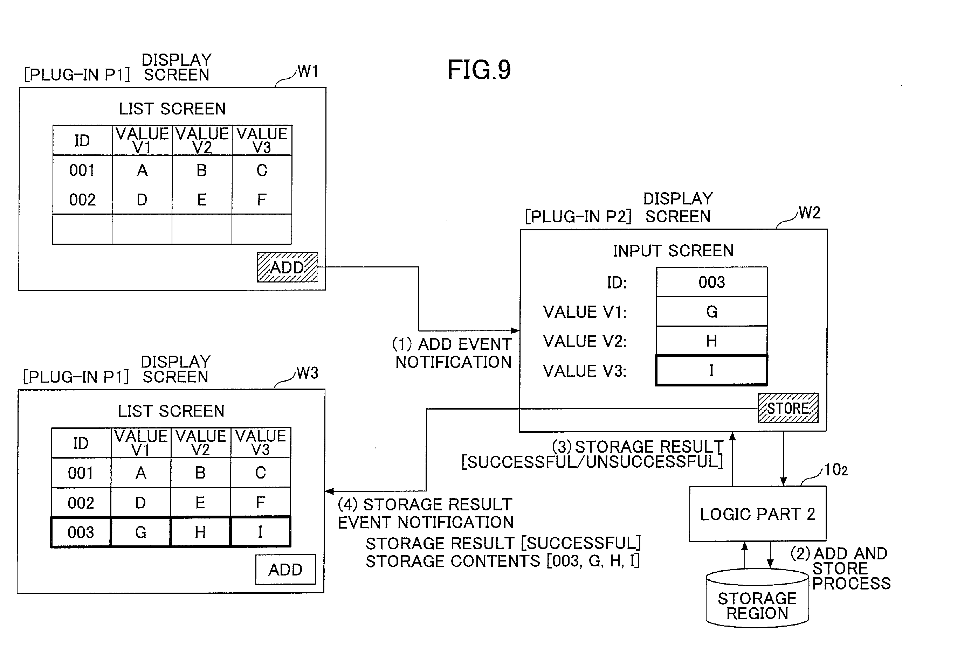

Next, a description will be given of the plug-in interacting function in which a bi-directional information transfer is made between the plug-ins, by referring to FIG. 9. FIG. 9 is a diagram for explaining an example of the plug-in interacting operation in the third embodiment of the present invention. The plug-in interacting function of this embodiment may realize an interacting operation in which the bi-directional information transfer is made between the plug-ins.

First, the UI part 20₁ of the plug-in P1 displays a list of 3 set values (values V1, V2, and V3) that are grouped according to the identifier (ID), on a screen (or window) W1 of the plug-in P1. In response to pushing of a button "ADD" on the screen W1 by the user, the plug-in P1 notifies an add event to add new set values in a storage region (or data area), from the UI part 20₁ to the UI part 20₂ of the plug-in P2, as illustrated by (1) in FIG. 9.

In response to the notification of the add event, the plug-in P2 displays a screen W2 to input the set values, and thus, the transition is made from the screen of the plug-in P1 to screen of the plug-in P2. In response to inputting of the identifier and the set values (ID: 003, V1: G, V2: H, V3: I) and pushing of a "STORE" button on the screen W2 by the user, the plug-in P2 adds and stores the set values in the storage region by the logic part 10₂ that accepts the instruction related to the store process from the UI part 20₂, as indicated by (2) in FIG. 9. A storage result [successful/unsuccessful] is sent from the logic part 10₂ to the UI part 20₂, as indicated by (3) in FIG. 9. As a result, the UI part 20₂ notifies the storage result [successful/unsuccessful] and the storage contents [003, G, H, I], as a storage result event, to the UI part 20₁ of the plug-in P1, as indicated by (4) in FIG. 9.

In response to the notification of the storage result event, the plug-in P1 displays a list screen W3 including the added set values, and the transition is made from the screen of the plug-in P2 to the screen of the plug-in P1. Thus, the display screen of the plug-in P1 is updated (screen W1→screen W3).

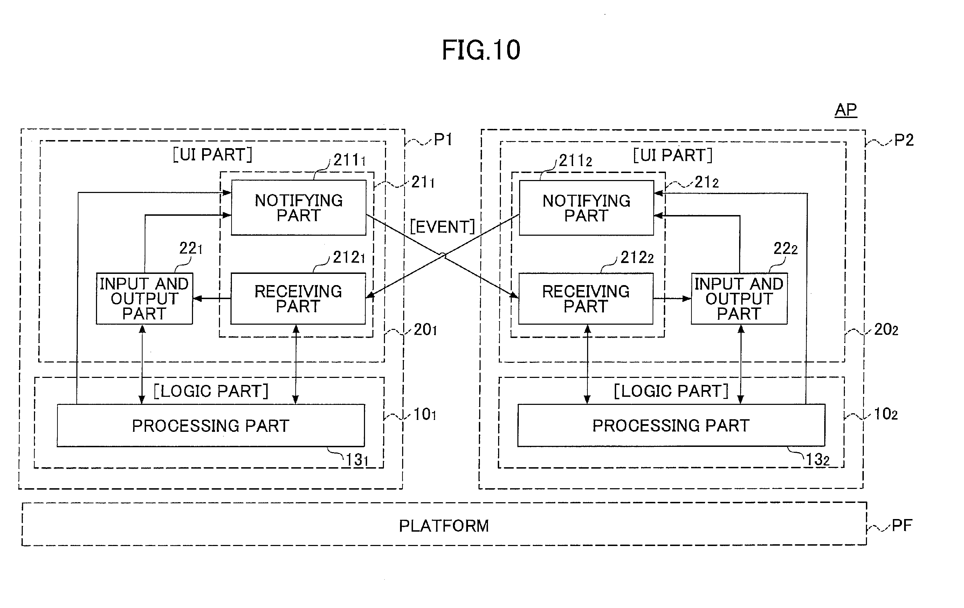

FIG. 10 is a block diagram illustrating an example of a functional structure of the information processing apparatus in the third embodiment of the present invention. In FIG. 10, those parts that are the same as those corresponding parts in FIG. 7 are designated by the same reference numerals, and a description thereof will be omitted.

As may be seen by comparing FIG. 7 and FIG. 10, the screen transition control part 21 of the UI part 20 includes both the notifying part 211 and the receiving part 212 in the plug-in interacting function of this embodiment. By this functional structure of the information processing apparatus 100, this embodiment may make a bi-directional information transfer between the plug-ins.

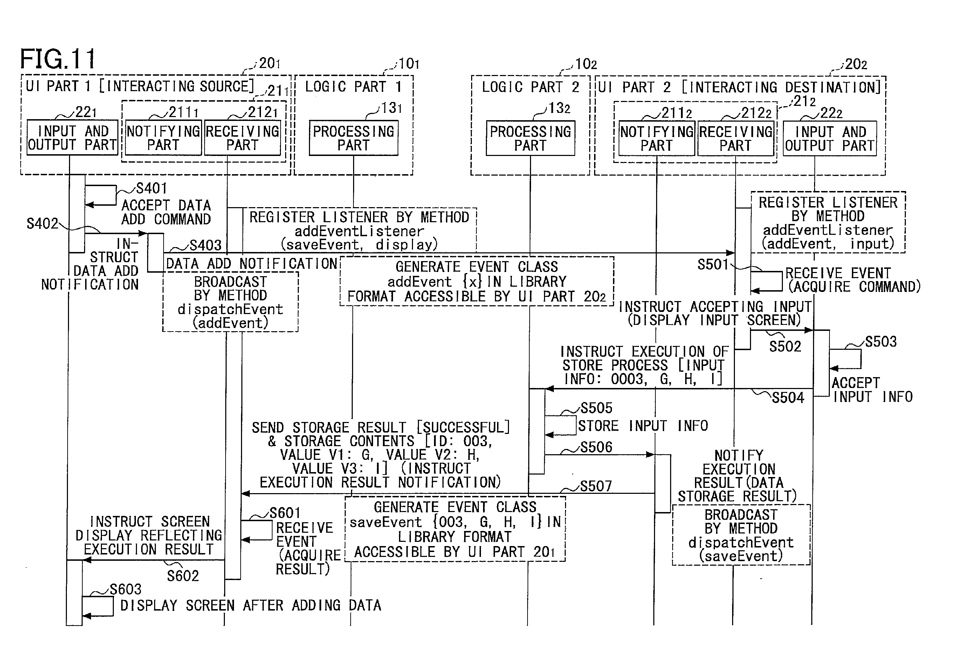

FIG. 11 is a sequence diagram for explaining in detail an example of a sequence of the plug-in interaction process in the third embodiment of the present invention. FIG. 11 illustrates an example of the sequence for a case where the plug-in interaction operation illustrated in FIG. 9 is performed.

As illustrated in FIG. 11, in the information processing apparatus 100, the input and output part 22₁ included in the UI part 20₁ of the plug-in P1 accepts a new set value (or data) add command (that is, pushing of the "ADD" button), in a step S401. The input and output part 22₁ instructs the notification of the accepted data add command to the notifying part 211₁ of the UI part 20₁, in a step S402. The notifying part 211₁ notifies a data add event to the plug-in P2 by a "dispatchEvent" method, in a step S403.

More particularly, the notifying part 211₁ performs the following process. That is, the notifying part 211₁ specifies and calls an event object (addEvent) to the "dispatchEvent" method. As a result, the "dispatchEvent" method broadcasts a specified event object with respect to a listener (or plug-in P2) that is registered via an "addEventListener" method for receiving the event. In this state, an event class (addEvent {x}) in which the data add command is defined is generated in a library format in the memory accessible by the plug-in P2 (or interacting destination) that is registered via the "addEventListener" method for receiving the event.

In the information processing apparatus 100, the receiving part 212₂ included in the UI part 20₂ of the plug-in P2 receives a data add notification from the plug-in P1, in a step S501. In this state, the receiving part 212₂ acquires the data add command defined from the event class.

Next, the receiving part 212₂ instructs a screen display to accept input of the identifier and the set values with respect to the input and output part 22₂ of the UI part 20₂, according to an execution process (input) at the time of receiving the event, in a step S502. Hence, a screen transition (screen 1→2) is instructed from the plug-in P1 to the plug-in P2.

The input and output part 22₂ accepts the identifier and the set values (or input information) input via the display screen, in a step S503. In addition, the input and output part 22₂ sends the accepted input information [003, G, H, I] to the processing part 13₂ included in the logic part 10₂ of the plug-in P2, and instructs execution of a storage process, in a step S504.

The processing part 13₂ stores the accepted input information in the storage region, in a step S505. The processing part 13₂ sends the storage result [successful] and the storage contents [ID: 003, V1: G, V2: H, V3: I] to the notifying part 211₂ of the UI part 20₂, and instructs notification of an execution result, in a step S506. The notifying part 211₂ notifies the execution result event by a "dispatchEvent" method, in a step S507.

On the other hand, the notifying part 211₂ performs the following process. That is, the notifying part 211₂ specifies and calls an event object (saveEvent) to the "dispatchEvent" method. As a result, the "dispatchEvent" method broadcasts a specified event object with respect to a listener (or plug-in P1) that is registered via an "addEventListener" method for receiving the event. In this state, an event class (saveEvent {003, G, H, I}) in which the execution result (storage contents in the case of result [successful]) is defined is generated in a library format in the memory accessible by the plug-in P1 (or interacting destination) that is registered via the "addEventListener" method for receiving the event.

In the information processing apparatus 100, the receiving part 212₁ included in the UI part 20₁ of the plug-in P1 receives an execution result notification from the plug-in P2, in a step S601. In this state, the receiving part 212₁ acquires the execution result defined from the event class.

Next, the receiving part 212₁ sends the execution result to the input and output part 22₁ of the UI part 20₁, according to an execution process (display) at the time of receiving the event, and instructs a screen display in which the execution result is reflected, in a step S602. Hence, a screen transition (screen 2→1) is instructed from the plug-in P2 to the plug-in P1.

In the information processing apparatus 100, the input and output part 22₁ included in the UI part 20₁ of the plug-in P1 generates a display screen (or list screen of set values), in a step S603. As a result, an operation screen (screen 1) of the plug-in P1, in which the execution result including the new added set values is reflected, is displayed on the display unit 102.

Therefore, in the information processing apparatus 100 in accordance with at least some of the embodiments, the screen display after the transition is instructed by notifying the processed result of the logic part 10₂ with respect to the UI part 20₂ of the plug-in P2 at the interacting destination, from the UI part 20₁ of the plug-in P1 at the interacting source.

In other words, in the information processing apparatus 100, the screen transition at the time of the plug-in interaction may be controlled by the UI part 20, and not by the logic part 10, and the processed result of the logic part 10 may be transferred to the interacting destination via the UI part 20. In addition, the information transfer at the time of the plug-in interaction may be performed between the interacting source and the interacting destination in one direction or in two directions.

In the information processing apparatus 100 in accordance with at least some of the embodiments, the interacting operation between the plug-ins may be performed in a state where the independence of the logic parts 10 and the UI parts 20 of the plug-ins P is maintained.

The plug-in interacting function of the information processing apparatus 100 may be realized by a program, that may be encoded in a programming language suited for the operating environment (or platform), executed by the CPU 106 in order to perform the steps or procedures described above.

The program may be stored in any suitable non-transitory or tangible computer-readable storage medium, including the recording medium 103a. The computer-readable storage medium (or the recording medium 103a) may include a floppy disk (registered trademark), a CD (Compact Disk), a DVD (Digital Versatile Disk), a SD (Secure Digital) memory card, a USB (Universal Serial Bus) memory, and the like.

In a case where the program is stored in the recording medium 103a, the program may be read by the drive unit 103 or the like and installed in the information processing apparatus 100. In addition, the program may be downloaded from a communication line, such as the Internet, via the interface unit 107, and installed in the information processing apparatus 100.

In the described embodiment, the event process at the time of the plug-in interaction between the UI parts 20 of the plug-ins P uses, as an example, the method belonging to the "EventDispatcher" class of the ActionScript (programming language used in Flash). However, the event process at the time of the plug-in interaction is of course not limited to such.

Moreover, the described embodiments may be arbitrarily combined if desired.

Further, the present invention is not limited to these embodiments, but various variations and modifications may be made without departing from the scope of the present invention.

## Claims

1. An information processing apparatus comprising:
a storage unit configured to store application software including a plurality of plug-ins; and
a processor configured to execute the application software stored in the storage unit;
**characterized in that**:
each of the plurality of plug-ins includes a user interface part configured to generate a display screen of a corresponding one of the plurality of plug-ins, and a logic part configured to perform a process to realize a function of the corresponding one of the plurality of plug-ins;
the corresponding one of the plug-ins includes at least one of a notifying part configured to notify a processed result of the logic part of the corresponding one of the plug-ins to another plug-in, and a receiving part configured to receive the processed result from the other plug-in; and
a first plug-in at an interacting source among the plurality of plug-ins notifies the processed result of the logic part of the first plug-in to the user interface part of a second plug-in at an interacting destination among the plurality of plug-ins, and the receiving part of the second plug-in receives the processed result from the notifying part of the first plug-in and the user interface part of the second plug-in generates a display screen of the second plug-in based on the processed result received by the receiving part of the second plug-in.

2. The information processing apparatus as claimed in claim 1, **characterized in that** the notifying part of the first plug-in generates a notifying event that enables the processed result of the logic part of the first plug-in to be acquired by the second plug-in that is registered as a receiving destination, and broadcasts the notifying event with respect to the second plug-in.

3. The information processing apparatus as claimed in claim 2, **characterized in that** the receiving part of the second plug-in acquires the processed result of the logic part of the first plug-in from the notifying event broadcast from the notifying part of the first plug-in.

4. The information processing apparatus as claimed in any of claims 1 to 3, **characterized in that**:
the notifying part of the second plug-in notifies the processed result of the logic part of the second plug-in with respect to the first plug-in; and
the receiving part of the first plug-in receives the processed result notified from the notifying part of the second plug-in, and generates the display screen of the first plug-in by the user interface part of the first plug-in based on the processed result received by the receiving part of the first plug-in.

5. A plug-in interaction method to be implemented in an information processing apparatus, comprising:
executing application software, stored in a storage unit and including a plurality of plug-ins, by a processor;
wherein each of the plurality of plug-ins includes a user interface part configured to generate a display screen of a corresponding one of the plurality of plug-ins, and a logic part configured to perform a process to realize a function of the corresponding one of the plurality of plug-ins;
notifying from a first plug-in at an interacting source among the plurality of plug-ins the processed result of the logic part of the first plug-in to the user interface part of a second plug-in at an interacting destination among the plurality of plug-ins; and
receiving by the receiving part of the second plug-in the processed result from the notifying part of the first plug-in and generating by the user interface part of the second plug-in a display screen of the second plug-in based on the processed result received by the receiving part of the second plug-in.

6. The plug-in interaction method as claimed in claim 5, comprising:
generating by the notifying part of the first plug-in a notifying event that enables the processed result of the logic part of the first plug-in to be acquired by the second plug-in that is registered as a receiving destination; and
broadcasting by the notifying part of the first plug-in the notifying event with respect to the second plug-in.

7. The plug-in interaction method as claimed in claim 6, comprising:
acquiring by the receiving part of the second plug-in the processed result of the logic part of the first plug-in from the notifying event broadcast from the notifying part of the first plug-in.

8. The plug-in interaction method as claimed in any of claims 5 to 7, comprising:
notifying by the notifying part of the second plug-in the processed result of the logic part of the second plug-in with respect to the first plug-in;
receiving by the receiving part of the first plug-in the processed result notified from the notifying part of the second plug-in; and
generating by the user interface part of the first plug-in the display screen of the first plug-in based on the processed result received by the receiving part of the first plug-in.

9. A computer-readable storage medium that stores a program which, when executed by a computer, causes the computer to perform a plug-in interaction process, said plug-in interaction process comprising:
a procedure causing the computer to execute application software stored in a storage unit and including a plurality of plug-ins;
wherein each of the plurality of plug-ins includes a user interface part configured to generate a display screen of a corresponding one of the plurality of plug-ins, and a logic part configured to perform a process to realize a function of the corresponding one of the plurality of plug-ins;
a procedure causing the computer to notify from a first plug-in at an interacting source among the plurality of plug-ins the processed result of the logic part of the first plug-in to the user interface part of a second plug-in at an interacting destination among the plurality of plug-ins; and
a procedure causing the computer to receive by the receiving part of the second plug-in the processed result from the notifying part of the first plug-in and to generate by the user interface part of the second plug-in a display screen of the second plug-in based on the processed result received by the receiving part of the second plug-in.

10. The computer-readable storage medium as claimed in claim 9, **characterized in that** the plug-in interaction process comprises:
a procedure causing the computer to generate by the notifying part of the first plug-in a notifying event that enables the processed result of the logic part of the first plug-in to be acquired by the second plug-in that is registered as a receiving destination; and
a procedure causing the computer to broadcast by the notifying part of the first plug-in the notifying event with respect to the second plug-in.

11. The computer-readable storage medium as claimed in claim 10, **characterized in that** the plug-in interaction process comprises:
a procedure causing the computer to acquire by the receiving part of the second plug-in the processed
result of the logic part of the first plug-in from the notifying event broadcast from the notifying part of the first plug-in.

12. The computer-readable storage medium as claimed in any of claims 9 to 11, **characterized in that** the plug-in interaction process comprises:
a procedure causing the computer to notify by the notifying part of the second plug-in the processed result of the logic part of the second plug-in with respect to the first plug-in;
a procedure causing the computer to receive by the receiving part of the first plug-in the processed result notified from the notifying part of the second plug-in; and
a procedure causing the computer to generate by the user interface part of the first plug-in the display screen of the first plug-in based on the processed result received by the receiving part of the first plug-in.
